# EUROPEAN PATENT APPLICATION

(11) **EP 0 526 182 A2**
(43) Date of publication of application: **03.02.1993**
(21) Application number: 92306919.9
(22) Date of filing: 29.07.1992
(51) Int. Cl.: G02F 1/13

(54) **LCD carrier**

(30) Priority: 30.07.1991 GB 9116424
(71) Applicant: Honeywell Control Systems Ltd., Bracknell, Berkshire RG12 1EB (GB)
(72) Inventor: Menzies, Graham Peter, Livingston, West Lothian EH54 6AR (GB)
(74) Representative: Fox-Male, Nicholas Vincent Humbert

(57) **Abstract**

A carrier 1 for a liquid crystal display unit has an optically-transparent backplate 2 with flanges 3, 4 forming grooves along which a unit can be slid. Arms 6, 7 support the unit by urging it against the flanges 3, 4. Recesses 11 accommodate backligh- ters whose light is directed into backplate 2 by surfaces 12.

## Description

The present invention relates to a carrier for a liquid crystal display unit.

A liquid crystal display unit comprises a layer of electro-optically active liquid material sandwiched between two glass plates with appropriates electrodes and connectors. Conventionally, this sealed unit is held in a carrier to make it sturdy and to ensure ease of assembly onto a circuit board. Sometimes the carrier holds a back-lighter unit and reflectors for backlighting the liquid crystal display. However, prior art arrangements are slow and inconvenient to assemble, and do not readily permit automatic assembly.

The present invention provides a liquid crystal display carrier comprising a body having means to hold a liquid crystal display unit in a given location, the body having a region of substantially optically transparent material disposed behind the location for the unit, means to accommodate a light source and means to direct light from the light source towards the substantially optically transparent region.

In this way, the carrier can provide effective and uniform back lighting of the liquid crystal display unit.

Preferably, the light directing means comprises means to cause multiple reflections of the light beam within and along the transparent region, and for example comprises a surface of the body, which surface is inclined (for example at substantially 30°) to the direction of light emitted from the light source means to cause reflection at the inner face of said surface.

Preferably the body has two such surfaces located at each of the two opposing ends of the carrier, the lightaccommodating means being arranged on the surfaces to provide equi-spaced coverage of the transparent region from alternating ends.

The carrier may have means to support a liquid crystal display unit in the carrier, the support means being located at a position which is near one end of said region and which is at a position along that end such as to be facing a light-accommodating means on the other end of said region; preferably the support means comprises a resilient arm extending out of said region to urge a display unit against flanges of the carrier.

The present invention also provides liquid crystal display carrier comprising a body having means to hold a liquid crystal display unit in a given location, the carrier characterised by the body having a region of substantially optically transparent material disposed behind the location for the unit, opposing ends of the region having a plurality of means to accommodate a light source arranged to be equispaced and alternating between the ends, each said end having a surface inclined to the plane of said region to direct light from the light sources towards and into said region.

Preferably, this carrier has a plurality of resilient arms to support a liquid display unit in the carrier, each of the arms arranged to be near one surface intermediate the light-accommodating means of that surface and facing a light-accommodating means of opposing surface.

Also, the present invention provides a construction of carrier enabling easy and convenient assembly with a back-lighting unit, and may be particularly suited to automatic assembly.

In order that the invention may more readily be understood, a description is now given, by way of example only, reference being made to the accompanying drawings of which:
Figure 1 is a perspective view of a carrier embodying the present invention;
Figure 2 is a perspective view of the carrier of Figure 1 from the other side;
Figure 3 is a cross-sectional view in the direction of arrows III-III in Figure 1.

A carrier 1 for a liquid crystal display unit comprises a one-piece moulding of optically-transparent material (for example polycarbonate or acrylic) having on one side a backplate 2 with lateral flanges 3 and 4 and end stops 5 allowing a liquid crystal display unit to be slid along the grooves formed by the flanges until it abuts the stops 5. Resilient arms 6 and 7 each with a protrusion 8 and 9 respectively are arranged to abut the back face of the unit and urge it against the flanges 3 and 4, in order that the unit is held securely and rigidly within the carrier regardless of the tolerance variation in the thickness of the unit.

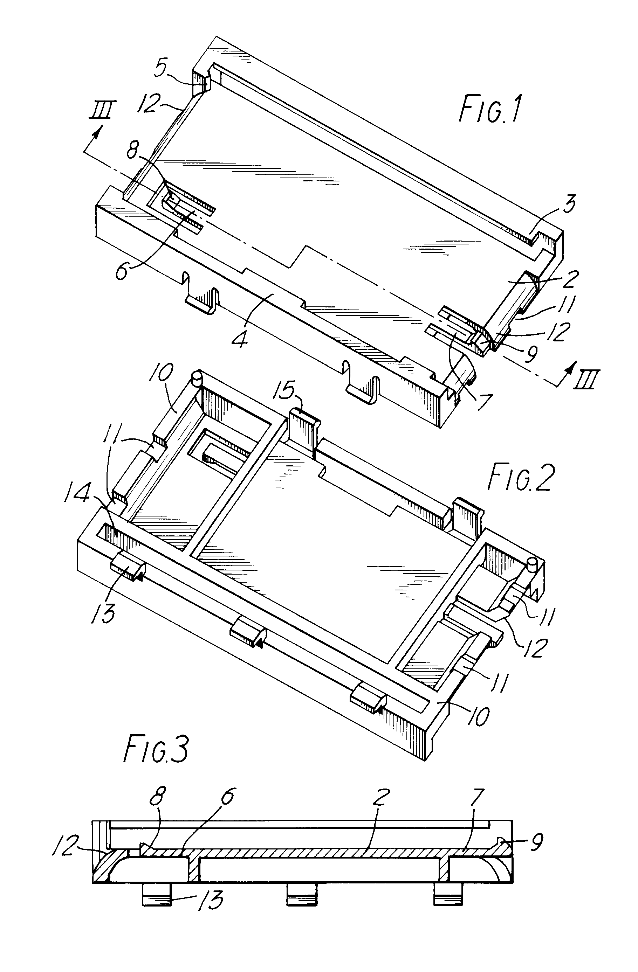

Each of the edges 10 on the other side of carrier 1 (see Figure 2) has two recesses 11, each to accommodate a light source directing a beam of light perpendicular to the major plane of carrier 1 and into the body towards a surface 12 inclined at 30 to the direction of the light beam, causing it to be reflected at the inner face of surface 12 through 120 and thereafter alternately along the upper and lower faces of backplate 2 to provide back- lighting of the unit when positioned in the carrier. The four recesses 11 are equi-spaced across the width of carrier 1, alternately on the two edges 10 and arranged, together with the positioning of arms 6 and 7, in order to maximise the amount, and uniformity, of back-lighting. Any appropriate surface of carrier 1 (e.g. surface 12 or either face of backplate 2) may have a slightly rough or bumpy surface (eg. achieved by moulding or by abrasion) in order to maximise the scattering of light during reflection or transmission and hence improve uniformity of backlighting.

Arm 7 and protrusion 9 have an additional function of abutting the edge of the unit once it has been slid along the grooves, thereby retaining the unit in position and contacting the end stops 5.

Three hinge lugs 13 are located on that edge of carrier 1 having an enclosure 14 to accommodate a strip of electrically-conductive zebra connector to provide electrical connection between the liquid crystal display unit and the circuit board. Once the carrier 1 contains the liquid crystal display unit and the zebra connector, the carrier 1 is attached to the appropriate circuit board by hooking lugs 13 into apertures in the board, and rotating the carrier about these hinge lugs 13 until two resilient clasps 15 on the opposite edge of carrier 1 engage with appropriate holes on the circuit board. In order for the zebra strip to make effective electrical contact with the unit and the board, its length must be compressed by about 15%; to achieve this requires a pressure of about 70 Pascal. By rotating the carrier 1 about the edge containing the zebra strip so as to apply the force as a moment involving the width of the carrier 1, the actual force applied is kept to a minimum, thereby reducing the likelihood of failure or breakage of other components during this operation and making the attachment of carrier 1 onto the board easy.

## Claims

1. A liquid crystal display carrier comprising a body having means to hold a liquid crystal display unit in a given location, the carrier characterised by the body having a region (2) of substantially optically transparent material disposed behind the location for the unit, means (11) to accommodate a light source and means (12) to direct light from the light source towards the substantially optically transparent region.

2. A liquid crystal display carrier according to Claim 1, characterised in that the light directing means (12) comprises means to cause multiple reflections of the light beam within and along the transparent region.

3. A liquid crystal display carrier according to Claim 1 or 2 characterised in that the light directing means (12) comprises a surface of the body inclined to the direction of light emitted from the light source means to cause reflection at the inner face of said surface.

4. A liquid crystal display carrier according to any preceding Claim characterised in that the body has two such surfaces located at each of the two opposing ends of the carrier.

5. A liquid crystal display carrier according to Claim 3 or 4, characterised in that one or each said surface has a plurality of light-accommodating means.

6. A liquid crystal display carrier according to Claim 5 characterised in that the light-accommodating means are arranged on the surfaces to provide equi-spaced coverage of the transparent region from alternating ends.

7. A liquid crystal display carrier according to any preceding claim characterised by means to support a liquid crystal display unit in the carrier, the support means being located at a position which is near one end of said region and which is at a position along that end such as to be facing a light-accommodating means located on the other end of said region.

8. A liquid crystal display carrier according to Claim 7, characterised in that the support means comprises a resilient arm extending out of said region to urge a display unit again flanges of the carrier.

9. A liquid crystal display carrier comprising a body have means to hold a liquid crystal display unit in a given location, the carrier characterised by the body having a region of substantially optically transparent material disposed behind the location for the unit, opposing ends of the region having a plurality of means to accommodate a light source arranged to be equi-spaced and alternating between the ends, each said end having a surface inclined to the plane of said region to direct light from the light sources towards and into said region.

10. A liquid crystal display carrier according to Claim 9 characterised by a plurality of resilient arms to support a liquid display unit in the carrier, each of the arms arranged to be near one surface such as to be intermediate the light-accommodating means of that surface and facing a light-accommodating means of the opposing surface.
